**Europäisches Patentamt**

**European Patent Office**

**Office européen des brevets**

(19)

(11) Veröffentlichungsnummer: **0 305 809**
**A1**

(12) # EUROPÄISCHE PATENTANMELDUNG

(21) Anmeldenummer: **88113347.4**

(22) Anmeldetag: **17.08.88**

(51) Int. Cl.⁴: **C03B 23/20 , C03B 23/06 ,**
**H01J 61/30 , H01J 9/24**

(30) Priorität: **04.09.87 DE 3729709**

(43) Veröffentlichungstag der Anmeldung:
**08.03.89 Patentblatt 89/10**

(84) Benannte Vertragsstaaten:
**DE FR GB IT SE**

(71) Anmelder: **Patent-Treuhand-Gesellschaft für**
**elektrische Glühlampen mbH**
**Postfach 22 16 34**
**D-8000 München 22(DE)**

(72) Erfinder: **Klein, Lutz**
**Marderweg 5**
**D-8900 Augsburg(DE)**
Erfinder: **Panofski, Ernst**
**Hochfeldstrasse 3**
**D-8900 Augsburg(DE)**

(54) **Verfahren zur Herstellung eines Entladungsgefässes für kompakte Niederdruckentladungslampen.**

(57) Bei einem Verfahren zur Herstellung eines ein- oder mehrfach gebogenen rohrförmigen Entladungsgefäßes (18) aus Glas mit mehreren geraden Rohrabschnitten und 180°-Biegungen wird vor dem jeweiligen Biegevorgang an dem für die Ausführung der 180°-Biegung benötigten Abschnitt des geraden Glasrohres (1; 21) in den Bereich, der beim Biegen die stärkste Dehnung erfährt, ein rinnenförmiges Glasteil (2; 22) angebracht und mit dem Glasrohr verschmolzen. Durch das Glasteil wird an der Stelle, an der eine 180°-Biegung vorgesehen ist, die Rohrwand verstärkt. Somit wird verhindert, daß nach dem Biegevorgang die Wand des Glasrohres an der äußeren Mantelfläche der Biegung eine gewisse Mindestwanddicke unterschreitet.

FIG. 2

EP 0 305 809 A1

## Verfahren zur Herstellung eines Entladungsgefäßes für kompakte Niederdruckentladungslampen

Die Erfindung betrifft ein Verfahren zur Herstellung eines ein- oder mehrfach gebogenen rohrförmigen Entladungsgefäßes für eine kompakte Niederdruckentladungslampe entsprechend dem Oberbegriff des Anspruchs 1.

Aus der DE-OS 30 05 052 ist ein Verfahren zur Herstellung eines mehrfach gebogenen rohrförmigen Entladungsgefäßes für elektrische Entladungslampen bekannt. Zur Herstellung der Biegungen wird dazu ein im wesentlichen gerades Glasrohr an den entsprechenden Stellen bis zum Erweichen erhitzt und durch entsprechendes Schwenken der nicht erhitzten Teile das Rohr an den erhitzten Stellen um einen Formkörper herumgebogen.

Auch in der EP-PS 61 758 wird ein Verfahren zur Herstellung eines ein- oder mehrfach gebogenen rohrförmigen Entladungsgefäßes für eine Quecksilberdampf-Niederdruckentladungslampe beschrieben. Die zu biegenden Rohrteile eines geraden Glasrohres werden auf Erweichungstemperatur gebracht und durch Gegeneinanderbiegen der benachbarten Rohrteile eine 180°-Biegung erstellt. Anschließend wird die 180°-Biegung in einen Formkörper gegeben und durch Einblasen von Druckluft in die Rohrenden eine dem Formkörper entsprechende U-förmige Biegung mit im wesentlichen rechtwinkligen Ecken hergestellt. Die rechtwinkligen Ecken dienen dabei als Kühlstelle für den optimalen Betrieb der Lampe.

Als nachteilig erweist sich bei der Herstellung der 180°-Biegungen, daß die Wanddicke des Glasrohres an der äußeren Mantelfläche der Biegung durch den Biegevorgang abnimmt. Bei der Erstellung von 180°-Biegungen mit im wesentlichen rechtwinkligen Ecken wird diese Abnahme noch weiter verstärkt. Aufgrund der dünnen Wand sind daher die Entladungsgefäße an diesen Stellen besonders bruchgefährdet.

Die Bruchgefährdung kann verhindert werden, indem bei der Herstellung des Entladungsgefäßes ein Glasrohr mit einem entsprechend großen Wanddurchmesser verwendet wird, so daß nach Erstellung der 180°-Biegungen die Glaswand an der äußeren Mantelfläche eine gewisse Mindestwanddicke nicht unterschreitet. Dadurch wird jedoch eine erhebliche Gewichtszunahme des Gefäßes und damit der Lampe sowie eine Kostensteigerung in Kauf genommen.

Aufgabe der Erfindung ist es, ein Verfahren zur Herstellung eines ein- oder mehrfach gebogenen Entladungsgefäßes aus Glas zu finden, wobei trotz Verwendung eines geraden Glasrohres mit einer Wanddicke, wie sie für die geraden Rohrteile ausreichend ist, auch in den Bereichen der Biegungen, wo der Biegeradius am größten ist, eine gewisse Mindestwanddicke nicht unterschritten wird. Insbesondere soll mit dem Verfahren keine wesentliche Gewichtszunahme beim Entladungsgefäß verbunden sein.

Die Aufgabe wird bei dem erfindungsgemäßen Verfahren durch Verfahrensschritte entsprechend den kennzeichnenden Merkmalen des Anspruchs 1 gelöst. Weitere vorteilhafte Verfahrensschritte sind den Unteransprüchen zu entnehmen.

Durch das Anbringen der rinnenförmigen Glasteile an den Stellen des geraden Glasrohres, die aufgrund des Biegevorganges eine besonders starke Abnahme der Wanddicke erfahren, wird dort eine ausreichend große Wanddicke geschaffen, um die Bruchgefährdung weitgehend zu reduzieren. Da die Verstärkung der Wand lediglich in den Bereichen erfolgt, in denen das Entladungsgefäß eine Biegung aufweist, wird das Gefäß durch das Verfahren nur geringfügig schwerer.

Vorteilhafterweise besitzt das gerade Glasrohr einen kreisförmigen und das rinnenförmige Glasteil einen halbkreisförmigen Querschnitt, da sich in diesem Fall die Verschmelzung der beiden Teile sehr einfach gestaltet. Das rinnenförmige Glasteil kann sowohl innen als auch außen am Glasrohr angebracht werden, je nachdem ob das Entladungsgefäß besonders gleichmäßige Außen- oder Innenkonturen aufweisen soll.

Zur Herstellung von rechtwinkligen Ecken an der 180°-Biegung kann die Biegung in einem speziellen Verfahrensschritt in eine entsprechende Form gegeben und die Ecken durch Einblasen von Druckluft in die Rohrenden erzeugt werden. Die rechtwinkligen Ecken dienen beim fertigen Entladungsgefäß als Kühlstellen, durch die der Dampfdruck im Gefäß und damit die Lichtausbeute geregelt wird.

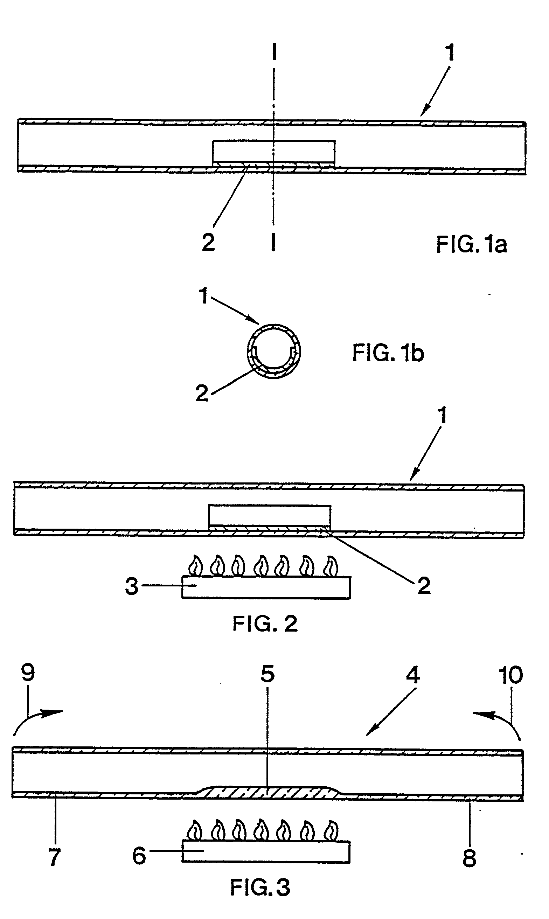

Das erfindungsgemäße Verfahren ist anhand der in den Figuren 1a bis 5 sowie 6a bis 8 dargestellten Verfahrensabläufe näher veranschaulicht.

Das in den Figuren 1a bis 5 aufgeführte Verfahren zeigt die Herstellung eines einfach gebogenen rohrförmigen Entladungsgefäßes, bei der die Wanddicke im Bereich der Biegung durch ein innen im Glasrohr angebrachtes Glasteil verstärkt wird. In Figur 1a ist das gerade Glasrohr 1 dargestellt, in das im Bereich der später zu erstellenden Biegung ein rinnenförmiges Glasteil 2 gelegt ist. Das Glasrohr 1 weist, wie in Figur 1b gezeigt, die einen Schnitt durch das Glasrohr in Figur 1a an der Stelle I-I darstellt, einen kreisförmigen Querschnitt auf. Das eingeschobene Glasteil 2 besitzt einen halbkreisförmigen Querschnitt mit einem äußeren Radius, der etwas kleiner als der Innenradius des Glasrohres 1 ist.

Nach Anbringen des rinnenförmigen Glasteils 2 im Glasrohr 1 wird, wie in Figur 2 dargestellt, der Bereich des Glasrohres 1, in dem sich das Glasteil 2 befindet, mittels eines Gasbrenners 3 erwärmt und das Glasteil 2 mit dem Glasrohr 1 verschmolzen. Nach der Verschmelzung weist das Glasrohr 4, wie in Figur 3 gezeigt, eine Verdickung 5 auf. Diese Verdickung 5 wird nun nochmals mittels eines Gasbrenners 6 bis zum Erweichen erwärmt. Anschließend wird durch Gegeneinanderbiegen der seitlich von dem verdickten Bereich 5 befindlichen geraden Rohrabschnitte 7, 8 nach oben - entsprechend den Pfeilen 9 und 10 - eine 180°-Biegung erzeugt. Der Biegevorgang wird nach oben ausgeführt, damit die Verdickung 7 zur Bildung der äußeren Mantelfläche an der 180°-Biegung zur Verfügung steht.

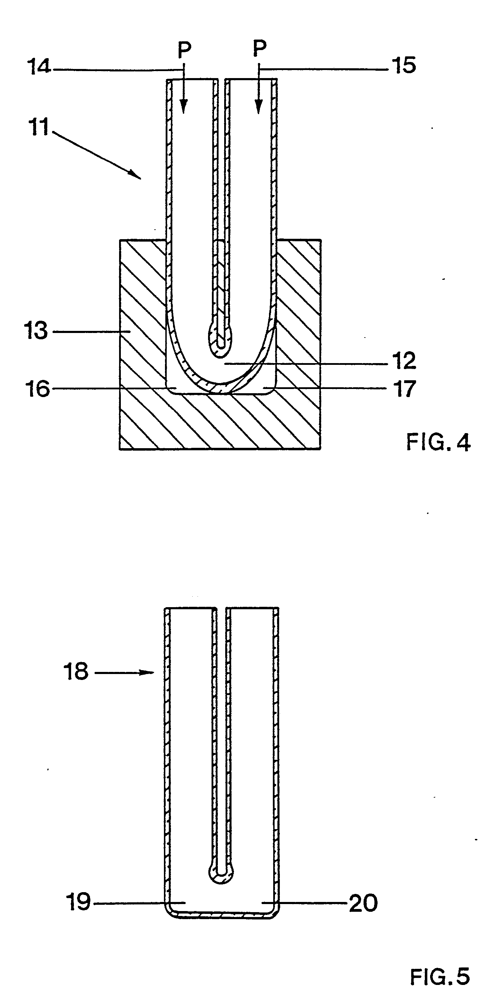

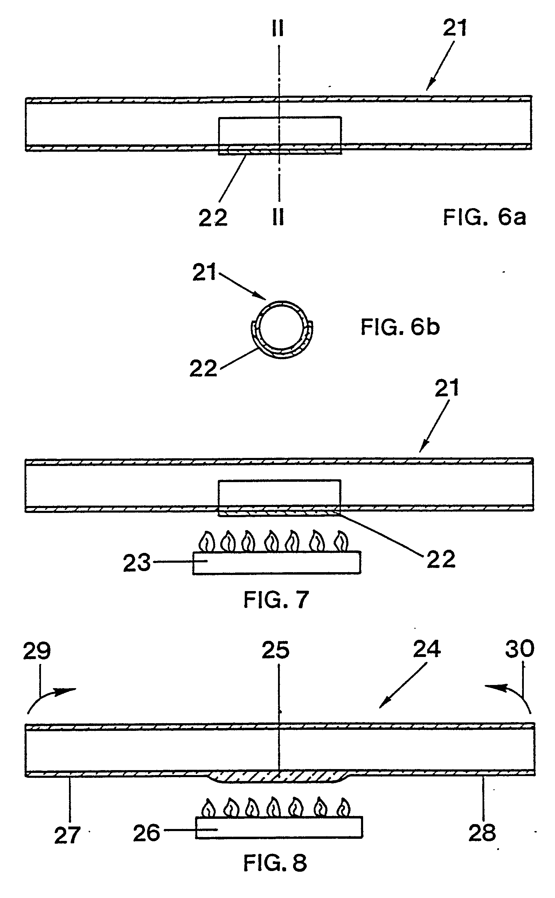

Anschließend wird, wie in Figur 4 dargestellt, das gebogene Glasrohr 11 mit der 180°-Biegung 12 in einen Formkörper 13 aus Metall gebracht. Mittels Preßluft, die - veranschaulicht durch die mit P bezeichneten Pfeile 14 und 15 - in die beiden Enden des gebogenen Glasrohres 11 befördert wird, wird das Glasrohr 11 in die rechtwinkligen Enden 16 und 17 des Formkörpers 13 geblasen. In Figur 5 ist das fertig geformte Entladungsgefäß 18 mit einer 180°-Biegung und zwei im wesentlichen rechtwinkligen Ecken 19 und 20 wiedergegeben.

In den Figuren 6a bis 8 ist ein abgewandeltes Verfahren zur Herstellung eines einfach gebogenen rohrförmigen Entladungsgefäßes gezeigt, wobei die Verstärkung der Wand im Bereich der Biegung durch ein außen am Glasrohr angebrachtes Glasteil erreicht wird. Figur 6a zeigt das gerade Glasrohr 21, an dem außen im Bereich der später zu erstellenden Biegung ein rinnenförmiges Glasteil 22 angebracht ist. Das Glasrohr 21 weist, wie in Figur 6b dargestellt, die einen Schnitt durch das Glasrohr in Figur 6a an der Stelle II-II zeigt, einen kreisförmigen Querschnitt auf. Das außen am Glasrohr 21 angebrachte rinnenförmige Glasteil 22 besitzt einen halbkreisförmigen Querschnitt mit einem inneren Radius, der etwas größer als der Außenradius des Glasrohres 21 ist.

Nach Anbringen des rinnenförmigen Glasteils 22 am Glasrohr 21 wird, wie in Figur 7 dargestellt, das Glasteil 22 mittels eines Gasbrenners 23 erwärmt und mit dem Glasrohr 21 verschmolzen. Das mit dem rinnenförmigen Glasteil verschmolzene Glasrohr 24 weist, wie in Figur 8 gezeigt, außen eine Verdickung 25 auf.

Diese Verdickung wird nun nochmals mit einem Gasbrenner 26 bis zum Erweichen erwärmt und durch Gegeneinanderbiegen der seitlich von dem verdickten Bereich 25 befindlichen Glasrohrabschnitte 27, 28 nach oben - entsprechend den Pfeilen 29, 30 - eine 180°-Biegung an dem Glasrohr 24 erzeugt. Die weiteren Verfahrensschritte zur Herstellung eines einfach gebogenen Entladungsgefäßes mit rechtwinkligen Ecken entsprechen den in Figur 4 und 5 gezeigten Abläufen.

## Ansprüche

1. Verfahren zur Herstellung eines ein- oder mehrfach gebogenen rohrförmigen Entladungsgefäßes für eine kompakte Niederdruckentladungslampe mit mehreren geraden Rohrabschnitten und 180°-Biegungen (12), wobei zur Erstellung einer 180°-Biegung (12)
- der für die Ausführung der 180°-Biegung benötigte Abschnitt eines geraden Glasrohres (4, 24) bis zum Erweichen erwärmt wird
- und anschließend die seitlich von dem erwärmten Abschnitt sich erstreckenden geraden Rohrabschnitte (7, 8; 27, 28) gegeneinander gebogen werden, bis diese parallel zueinander ausgerichtet sind,
dadurch gekennzeichnet, daß vor dem jeweiligen Erwärmungs- und Biegevorgang
- an dem für die Ausführung der 180°-Biegung benötigten Abschnitt des geraden Glasrohres (1, 21) in dem Bereich, der beim Biegen die stärkste Dehnung erfährt, ein rinnenförmiges Glasteil (2, 22) angebracht wird
- der für die Ausführung der Biegung benötigte Abschnitt des geraden Glasrohres (1, 21) zusammen mit dem rinnenförmigen Glasteil (2, 22) bis zur Verschmelzungstemperatur erwärmt
- und mit dem rinnenförmigen Glasteil (2, 22) verschmolzen wird.

2. Verfahren nach Anspruch 1, dadurch gekennzeichnet, daß das gerade Glasrohr (1, 21) einen kreisförmigen Querschnitt und das rinnenförmige Glasteil (2, 22) einen halbkreisförmigen Querschnitt aufweist.

3. Verfahren nach Anspruch 2, dadurch gekennzeichnet, daß der äußere Radius des rinnenförmigen Glasteils (2) etwas kleiner als der Innenradius des geraden Glasrohres (1) ist und das rinnenförmige Glasteil (2) an der Innenwand des geraden Glasrohres (1) angebracht ist.

4. Verfahren nach Anspruch 2, dadurch gekennzeichnet, daß der innere Radius des rinnenförmigen Glasteils (22) etwas größer als der Außenradius des geraden Glasrohres (21) ist und das rinnenförmige Glasteil (22) an der Außenwand des geraden Glasrohres (21) angebracht ist.

5. Verfahren nach einem oder mehreren der Ansprüche 1 bis 4, dadurch gekennzeichnet, daß die jeweilige 180°-Biegung (12) des Glasrohres (11) nach dem Biegevorgang in eine entsprechende Form (13) gegeben wird und durch Einblasen von Druckluft in die Rohrenden rechtwinklige Ecken (19, 20) an der Biegung erzeugt werden.

FIG. 1a

FIG. 1b

FIG. 2

FIG. 3

FIG. 4

FIG.5

FIG. 6a

FIG. 6b

FIG. 7

FIG. 8

## EINSCHLÄGIGE DOKUMENTE

EP 88113347.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US - A - 2 475 431 (LUERTZING) | 1 | C 03 B 23/20 |
| A | * Spalte 1, Zeilen 43-49; Anspruch 1 * | 4 | C 03 B 23/06 |
| | -- | | H 01 J 61/30 |
| Y | US - A - 4 433 994 (FUJIMURA) | 1 | H 01 J 9/24 |
| | * Fig. 3,6a-6c; Spalte 1, Zeilen 51-59; Anspruch 1 * | | |
| | -- | | |
| A | DE - A - 1 773 739 (PHILIPS) | 3 | |
| | * Fig. 2a,2b; Ansprüche 1-2 * | | |
| | -- | | |
| A | PATENT ABSTRACTS OF JAPAN, unexamined applications, C Field, Band 10, Nr. 13, 18. Jänner 1986 THE PATENT OFFICE JAPANESE GOVERNMENT Seite 5 C 323 | 5 | |
| | * Kokai-Nr. 60-166 241 (MITSUBISHI DENKI) * | | |
| | ---- | | |

**RECHERCHIERTE SACHGEBIETE (Int. Cl.4)**

C 03 B 23/00

H 01 J 9/00

H 01 J 61/00

Der vorliegende Recherchenbericht wurde für alle Patentansprüche erstellt.

| Recherchenort | Abschlußdatum der Recherche | Prüfer |
|---|---|---|
| WIEN | 21-11-1988 | BRUNNER |